# EUROPÄISCHE PATENTSCHRIFT

(11) **EP 3 804 953 B1**
(45) Veröffentlichungstag und Bekanntmachung des Hinweises auf die Patenterteilung: **30.03.2022**
(21) Anmeldenummer: 20199249.2
(22) Anmeldetag: 30.09.2020
(51) Int. Cl.: B29C 48/09, B29C 48/13, B29C 48/30, B29C 48/92

(54) **VORRICHTUNG UND VERFAHREN ZUR HERSTELLUNG VON KUNSTSTOFFROHR**
DEVICE FOR MANUFACTURING A PLASTIC TUBE
DISPOSITIF DE FABRICATION DE TUYAUX EN MATIÈRE PLASTIQUE

(30) Priorität: 09.10.2019 DE 102019127168
(43) Veröffentlichungstag der Anmeldung: 14.04.2021
(73) Patentinhaber: UNICOR GmbH, 97437 Hassfurt (DE)
(72) Erfinder: FIEBIG, Christian, 96049 Bamberg (DE)
(74) Vertreter: Köhler, Walter

(56) Entgegenhaltungen:
- CA-A1- 2 461 442
- CN-A- 110 170 558
- JP-B2- 3 392 195
- US-A- 5 256 346
- US-B2- 10 279 536

## Beschreibung

Die Erfindung betrifft eine Vorrichtung zur Herstellung von vorzugsweise gewelltem Kunststoffrohr aus einem Kunststoffschmelzeschlauch. Eine solche Vorrichtung wird üblicherweise Korrugator genannt.

Aus dem Stand der Technik ist ein Einsatz einer Sensorik zur Messung von Produktionsparametern in einem Korrugator bzw. in einem einem solchen Korrugator vorgeschalteten Extruder zur Extrusion eines Kunststoffschmelzeschlauchs bekannt:
Die europäische Patentschrift EP 0 065 729 B1 beschreibt einen ortsfest in einem Gestell eines Korrugators angeordneten Temperatursensor zur Messung der Temperatur von an dem Gestell vorbeigeführten Formbacken.

Die kanadische Patentanmeldung CA 2 461 442 A1 beschreibt die Anordnung von Sensoren im Bereich der Austrittsdüseneinrichtung im Spritzkopf eines einem Korrugator vorgeschalteten Extruders. Bei den Sensoren handelt es sich um einen Ultraschallsensor zur Messung einer Fließgeschwindigkeit im Spritzkopf in Verbindung mit einem Temperatursensor und einem Drucksensor. Die deutsche Patentanmeldung DE 10 2007 038 404 A1 beschreibt einen Korrugator mit einer Sensorik zur Positionsbestimmung.

Die österreichische Übersetzung E 75 995 B der europäischen Patentschrift EP 0 352 255 B1 beschreibt einen Korrugator mit einem Drucksensor.

Die deutsche Patentanmeldung DE 40 17 612 404 A1 beschreibt eine Vorrichtung zur Extrusion von Kunststoffen mit Drucksensoren.

Nach dem Stand der Technik kann die Qualität des Kunststoffrohrs erst nach der Herstellung des Kunststoffrohrs beispielsweise durch Heraustrennen eines Probestücks überprüft werden. Daher ist die Sicherstellung der Qualität des Kunststoffrohrs nach dem Stand der Technik aufwändig, wie zum Beispiel in der amerikanischen Patentschrift US 10 279 536 B2 beschrieben ist. Aufgabe der vorliegenden Erfindung ist es, die Nachteile aus dem Stand der Technik zu beseitigen. Insbesondere soll eine Vorrichtung zur Herstellung von vorzugsweise gewelltem Kunststoffrohr bereitgestellt werden, bei der eine hohe Qualität des herzustellenden Kunststoffrohrs sichergestellt werden kann. Weiterhin sind eine in der Vorrichtung einzusetzende Formbacke, ein aus zwei solchen Formbacken gebildetes Formbackenpaar und ein Verfahren zur Herstellung von vorzugsweise gewelltem Kunststoffrohr anzugeben.

Erfindungsgemäß wird diese Aufgabe vorrichtungsmäßig mit dem Gegenstand des Anspruchs 1 gelöst und verfahrensmäßig mit dem Gegenstand des Anspruchs 14 gelöst. Vorteilhafte Ausgestaltungen der Erfindung sind dazu jeweils in den abhängigen Ansprüchen angegeben.

Erfindungsgemäß umfasst die Vorrichtung zur Herstellung von vorzugsweise gewelltem Kunststoffrohr aus einem Kunststoffschmelzeschlauch
- einen Spritzkopf zum Anschluss an einen Extruder, wobei der Spritzkopf mit einer Austrittsdüseneinrichtung zur Extrusion des

Kunststoffschmelzeschlauchs versehen ist, und
- mehrere jeweils eine Formfläche zum vorzugsweise gewellten Formen des extrudierten Kunststoffschmelzeschlauchs aufweisende Formbacken.

Die Formfläche ist vorzugsweise konkav. Die Formfläche bildet vorzugsweise eine Negativform für ein gewelltes Formen des extrudierten Kunststoffschmelzeschlauchs zur Herstellung von gewelltem Kunststoffrohr. Dazu umschließt die Formfläche vorzugsweise den halben Umfang des extrudierten Kunststoffschmelzeschlauchs. Die Formfläche weist vorzugsweise eine im Wesentlichen halbzylinderförmigen Erstreckung und eine gewellte Oberfläche auf. Die an der Oberfläche vorgesehenen Wellen sind dabei vorzugsweise derart ausgestaltet, dass sich Wellenberge bzw. Wellentäler jeweils in Umfangsrichtung der Formfläche erstrecken. Die Wellenberge bzw. Wellentäler erstrecken sich also jeweils senkrecht zu einer Längsrichtung, die parallel zu einer durch die halbzylinderförmige Erstreckung definierten Zylinderachse verläuft.

Die Formbacken sind mittels einer Antriebseinrichtung jeweils paarweise zum Formen des extrudierten Kunststoffschmelzeschlauchs entlang einer Formstrecke in Produktionsrichtung des extrudierten Kunststoffschmelzeschlauchs geführt angeordnet. Die Formbacken sind weiterhin mittels der Antriebseinrichtung in einer Rückführeinrichtung rückgeführt angeordnet. Die paarweise entlang der Formstrecke geführten Formbacken bilden mit ihren einander zugewandten Formflächen einen Aufnahmeraum zur Aufnahme des Kunststoffschmelzeschlauchs.

Die Formbacken bilden dabei vorzugsweise eine zusammenhängende Kette. Die einzelnen Formbacken weisen vorzugsweise jeweils die gleichen Abmessungen auf, insbesondere die gleiche Höhe, gleiche Länge und gleiche Breite.

Im Sinne der vorliegenden Erfindung werden die Begriffe Kunststoffschmelzeschlauch und Kunststoffrohr zumeist als gleichbedeutend verstanden. Der Kunststoffschmelzeschlauch wird durch die Formbacken vorzugsweise kontinuierlich gekühlt und geformt. Im Laufe dieses Prozesses wird der Kunststoffschmelzeschlauch zum Kunststoffrohr. Entlang der Formstrecke ergibt sich also ein Zwischenzustand, der wahlweise mit den Begriffen Kunststoffschmelzeschlauch und/oder Kunststoffrohr bezeichnet wird.

Vorzugsweise weist die Vorrichtung weiterhin einen zentral am Spritzkopf befestigten Kühldorn zum Kühlen des extrudierten Kunststoffschmelzeschlauchs auf. Der extrudierte Kunststoffschmelzeschlauch umgibt vorzugsweise den zentral angeordneten im Wesentlichen zylinderförmigen Kühldorn, indem der Kunststoffschmelzeschlauch auf der Außenfläche des Kühldorns entlang der Formstrecke geführt ist.

Erfindungsgemäß weist mindestens eine der Formbacken eine Sensoreinrichtung auf, die mindestens einen Sensor mit einem Daten erfassenden Sensorkopf umfasst. Vorzugsweise weisen mehrere, besonders bevorzugt alle in der Vorrichtung vorgesehenen Formbacken jeweils eine Sensoreinrichtung auf.

Das Erfassen von Daten mittels des Sensorkopfs basiert vorzugsweise auf dem Messen von physikalischen Größen oder auf dem Detektieren eines Zustands.

Der Sensorkopf ist derart angeordnet, dass sein Erfassungsbereich einen Bereich der Formfläche und/oder einen Bereich des Aufnahmeraums umfasst.

Durch die erfindungsgemäße Anordnung des Sensorkopfs können Daten des Kunststoffschmelzeschlauchs erfasst werden. Vorzugsweise können dadurch die Daten in-situ bei der Herstellung des Kunststoffrohrs erfasst werden. Es werden hierbei insbesondere physikalischen Größen des Kunststoffschmelzeschlauchs gemessen und/oder ein Zustand des Kunststoffschmelzeschlauchs detektiert.

Im Sinne der vorliegenden Erfindung wird unter dem "Erfassungsbereich" eines Sensorkopfs dasjenige räumliche Volumen verstanden, in dem bzw. aus dem der Sensorkopf Daten erfasst. Bei einem Thermoelement aus einem an einer Verbindungsstelle verbundenen Leiterpaar ist der Erfassungsbereich beispielsweise die Verbindungsstelle, das heißt der Sensorkopf selbst. Bei einem Ultraschallsensor dagegen ist der Erfassungsbereich vom Sensorkopf beabstandet.

Die erfindungsgemäße Vorrichtung zur Herstellung von vorzugsweise gewelltem Kunststoffrohr ermöglicht daher eine prozessnahe Überwachung der Eigenschaften des Kunststoffschmelzeschlauchs. Vorteilhafterweise erfolgt die Erfassung der Daten in-situ. Die Überwachung erfolgt vorteilhafterweise in Echtzeit. Daher ist ein genaueres Verständnis des Formgebungsprozesses des Kunststoffschmelzeschlauchs bzw. des Kunststoffrohrs ermöglicht. Insbesondere können Prozessparameter zeitnah und in-situ angepasst werden. Dadurch kann der Formgebungsprozess optimiert werden. Insbesondere kann dadurch eine hohe Qualität des herzustellenden Kunststoffrohrs sichergestellt werden.

Vorzugsweise umfasst die Sensoreinrichtung mehrere Sensoren mit jeweils einem Daten erfassenden Sensorkopf. Dabei können mehrere gleiche Sensoren und/oder verschiedenartige Sensoren vorgesehen sein. In der folgenden Beschreibung wird zur sprachlichen Vereinfachung meist von Sensor bzw. Sensorkopf in der Einzahl gesprochen. Die beschriebenen Merkmale können bei mehreren Sensoren bzw. mehreren Sensorköpfen einer auf der mindestens einen Formbacke vorgesehenen Sensoreinrichtung jeweils ausgebildet sein. Weiterhin kann eine Sensoreinrichtung mehrere Sensoren bzw. Sensorköpfe mit jeweils - zumindest zum Teil - unterschiedlichen Merkmalen aufweisen. Daher ist eine Vervielfachung und/oder Kombination der nachfolgenden für einen Sensor bzw. Sensorkopf beschriebenen Merkmale im Hinblick auf das Vorhandensein mehrerer Sensoren bzw. mehrerer Sensorköpfe hiermit ausdrücklich vorgesehen.

Der Sensorkopf kann derart angeordnet sein, dass er in direkten Kontakt mit dem zu formenden Kunststoffschmelzeschlauch gelangt. Es handelt sich also um ein berührendes Messen und/oder berührendes Detektieren des Kunststoffschmelzeschlauchs. Man kann den Sensorkopf in diesem Fall auch als "Tastspitze" bezeichnen. Der Sensorkopf liegt dabei vorzugsweise an der Formfläche an. Insbesondere kann der Sensorkopf bündig zur Formfläche angeordnet sein. Der Sensorkopf bildet vorzugsweise eine gleichmäßige, im Wesentlichen glatte Struktur mit der Formfläche aus.

Alternativ kann ein berührungsloses Messen und/oder berührungsloses Detektieren des Kunststoffschmelzeschlauchs erfolgen. Der Sensorkopf liegt in diesem Fall nicht an der Formfläche an, sondern ist beispielsweise versenkt hinter der Formfläche angeordnet. Der Sensorkopf kann beispielsweise in einem Sackloch angeordnet sein und dabei durch Material der Formbacke von der Formfläche bzw. vom Aufnahmeraum beabstandet sein. Vorzugsweise reicht der Erfassungsbereich des Sensorkopfs jedoch auch in diesen Fällen bis zur Formfläche und/oder bis in den Aufnahmeraum, d.h. insbesondere bis zum Kunststoffschmelzeschlauch. Vereinfacht gesprochen "schaut" der Sensor - gegebenenfalls durch Material der Formbacke hindurch - bis zur Formfläche bzw. bis in den Aufnahmeraum, d.h. insbesondere bis zum Kunststoffschmelzeschlauch.

In den folgenden Absätzen werden verschiedene Ausgestaltungen zur Anordnung des Sensorkopfs bezüglich der Formfläche beschrieben:
Nach einer vorteilhaften Ausgestaltung der Erfindung ist der Sensorkopf oder zumindest ein Abschnitt des Sensorkopfs auf der Formfläche, insbesondere unmittelbar auf der Formfläche, angeordnet, oder im Bereich der Formfläche innerhalb der Formbacke oder innerhalb des Aufnahmeraums, das heißt vorzugsweise außerhalb der Formfläche, z. B. von der Formfläche abstehend, angeordnet.

Je nach Anordnung des Sensorkopfs bezüglich der Formfläche kann in diesen Fällen berührendes Messen und/oder berührendes Detektieren oder berührungsloses Messen und/oder berührungsloses Detektieren des Kunststoffschmelzeschlauchs erfolgen.

Nach einer weiteren vorteilhaften Ausgestaltung der Erfindung ist der Sensorkopf oder zumindest ein Abschnitt des Sensorkopfs beabstandet zur Formfläche innerhalb der Formbacke oder innerhalb des Aufnahmeraums angeordnet.

Ein beabstandet zur Formfläche innerhalb der Formbacke angeordneter Sensorkopf gelangt vorzugsweise nicht in Kontakt mit dem zu formenden Kunststoffschmelzeschlauch, d.h. es erfolgt berührungsloses Messen und/oder berührungsloses Detektieren. Ein innerhalb des Aufnahmeraums angeordneter Sensorkopf gelangt vorzugsweise in direkten Kontakt mit dem zu formenden Kunststoffschmelzeschlauch, d.h. es erfolgt berührendes Messen und/oder berührendes Detektieren.

Nach einer weiteren vorteilhaften Ausgestaltung der Erfindung ist der Sensorkopf zumindest abschnittsweise auf die Formfläche aufgedruckt.

Der Sensorkopf kann vollständig auf die Formfläche aufgedruckt sein. Vorzugsweise kann der gesamte Sensor zumindest abschnittsweise oder vollständig auf die Formfläche aufgedruckt sein. Ein aufdruckbarer Sensor ist beispielsweise ein Thermoelement, das ein Leiterpaar aus kohlenstoffhaltigem Leitlack (englisch: "carbon black paint") und Silberleitlack aufweist. Der auf die Formfläche aufgedruckte Sensorkopf gelangt vorzugsweise in direkten Kontakt mit dem zu formenden Kunststoffschmelzeschlauch, d.h. es erfolgt berührendes Messen und/oder berührendes Detektieren.

Der aufgedruckte Sensorkopf und/oder der aufgedruckte Sensor kann weiterhin eine Trägerfolie aufweisen. Außerdem kann eine Isolierschicht zwischen der Formbacke und dem aufgedruckten Sensorkopf vorgesehen sein. Dies ist insbesondere im Fall des Thermoelements im Hinblick auf eine thermische Isolierung gegenüber der Formbacke vorteilhaft. Die Isolierschicht kann bereits vor dem Aufdrucken des Sensorkopfs bzw. des Sensors auf die Formfläche aufgebracht sein. Die Isolierschicht selbst kann auch gedruckt sein.

Der aufgedruckte Sensorkopf bzw. der aufgedruckte Sensor weist vorzugsweise eine Schichtdicke von 0,02 mm bis 0,1 mm auf, besonders bevorzugt von etwa 0,05 mm auf.

Das Aufdrucken des Sensorkopfs oder Sensors hat mehrere Vorteile. Ein aufgedruckter Sensorkopf bzw. aufgedruckter Sensor ist besonders platzsparend. Das Aufbringen erfolgt unmittelbar auf der Formfläche. Dadurch ist sichergestellt, dass das Erfassen von Daten exakt im Bereich der Formfläche erfolgt. Das Aufdrucken eines Sensorkopfs oder Sensors ist vergleichsweise einfach und kostengünstig. Weiterhin ist es nicht erforderlich, Bohrungen, Sackbohrungen oder dergleichen an der Formbacke vorsehen zu müssen.

Nach einer weiteren vorteilhaften Ausgestaltung der Erfindung ist der Sensorkopf in einer Bohrung, die in die Formfläche mündet, oder in einer mit der Bohrung kommunizierenden und in der Formfläche ausgebildeten Ausnehmung aufgenommen.

Der Sensorkopf ist dabei vorzugsweise bündig zur Formfläche angeordnet. Der Sensorkopf kann in der Bohrung und/oder in der Ausnehmung aufgenommen sein und/oder flach auf der Formfläche angeordnet sein. Der Sensorkopf gelangt in diesen Fällen vorzugsweise in direkten Kontakt mit dem zu formenden Kunststoffschmelzeschlauch, d.h. es erfolgt berührendes Messen bzw. berührendes Detektieren.

Nach einer weiteren vorteilhaften Ausgestaltung der Erfindung ist der Sensorkopf in einer die Formfläche nicht durchstoßenden, insbesondere in einer die Formfläche gerade nicht durchstoßenden, Sackbohrung innerhalb der Formbacke angeordnet. Zwischen der Sackbohrung und der Formfläche verbleibt vorzugsweise eine Materialstärke von 1 bis 20 mm. Besonders bevorzugt eine Materialstärke von 5 mm.

Insbesondere ist der Sensorkopf dabei in unmittelbarer Nähe der Formfläche, beispielsweise unmittelbar hinter der Formfläche angeordnet. Es verbleibt vorzugsweise eine Materialstärke von 1 bis 20 mm, besonders bevorzugt von 5 mm, zwischen dem Sensorkopf und der Formfläche. Wie oben bereits beschrieben erfolgt in dieser Ausgestaltung berührungsloses Messen (bzw. berührungsloses Detektieren) des Kunststoffschmelzeschlauchs.

Nach einer weiteren vorteilhaften Ausgestaltung der Erfindung weist die Sensoreinrichtung eine Datenaufnahmeeinrichtung zur Aufnahme der am Sensorkopf erfassten Daten auf.

Nach einer weiteren vorteilhaften Ausgestaltung der Erfindung ist der in der Sensoreinrichtung vorgesehene Sensor bewegungsfest mit der Formbacke, die die Sensoreinrichtung aufweist, verbunden, vorzugsweise an der Formbacke fixiert. Vorzugsweise ist die gesamte Sensoreinrichtung bewegungsfest mit der Formbacke verbunden.

Nach einer weiteren vorteilhaften Ausgestaltung der Erfindung weist die Sensoreinrichtung eine Datenübertragungseinrichtung und/oder eine Datenverarbeitungseinrichtung und/oder eine Datenspeichereinrichtung und/oder eine Datenanzeigeeinrichtung und/oder eine Energieversorgungseinrichtung auf und/oder ist mit einer solchen Einrichtung oder mehreren solchen Einrichtungen verbunden.

Vorzugsweise weist die Datenübertragungseinrichtung einen ersten und/oder einen zweiten Abschnitt auf. Der erste Abschnitt überträgt vorzugsweise Daten von einem Sensor oder von mehreren Sensoren zur Datenaufnahmeeinrichtung. Der zweite Abschnitt überträgt vorzugsweise Daten von der Sensoreinrichtung der Formbacke zu einer Kommunikationseinrichtung einer Steueranlage. Der erste und/oder der zweite Abschnitt können eine Verbindungsleitung und/oder eine Funkstrecke umfassen.

Nach einer weiteren vorteilhaften Ausgestaltung der Erfindung umfasst die Datenaufnahmeeinrichtung eine Datenverarbeitungseinrichtung und/oder eine Datenspeichereinrichtung. Zusätzlich kann die Datenaufnahmeeinrichtung die Datenübertragungseinrichtung, insbesondere den ersten Abschnitt der Datenübertragungseinrichtung umfassen.

Alternativ oder zusätzlich kann die Datenaufnahmeeinrichtung mit der Datenübertragungseinrichtung und/oder einer Datenanzeigeeinrichtung und/oder einer Energieversorgungseinrichtung verbunden sein. Die Datenaufnahmeeinrichtung kann mit dem ersten und/oder insbesondere mit dem zweiten Abschnitt der Datenübertragungseinrichtung verbunden sein. Die Verbindung kann leitungsgebunden sein und/oder eine Funkstrecke umfassen. Die Datenanzeigeeinrichtung kann einen Rechner und/oder einen Monitor umfassen. Die Datenanzeigeeinrichtung kann über die Datenübertragungseinrichtung, insbesondere über den zweiten Abschnitt der Datenübertragungseinrichtung, mit der Datenaufnahmeeinrichtung verbunden sein. Die Energieversorgungseinrichtung ist vorzugsweise eine Spannungsquelle für die genannten Komponenten der Sensoreinrichtung. Die Energieversorgungseinrichtung ist beispielsweise eine Batterie, insbesondere eine wiederaufladbare Batterie bzw. ein Akkumulator.

Nach einer weiteren vorteilhaften Ausgestaltung der Erfindung ist die Datenaufnahmeeinrichtung und/oder die Datenübertragungseinrichtung und/oder die Datenverarbeitungseinrichtung und/oder die Datenspeichereinrichtung und/oder die Datenanzeigeeinrichtung und/oder die Energieversorgungseinrichtung mit der Formbacke, die die Sensoreinrichtung aufweist, bewegungsfest verbunden. Die Datenaufnahmeeinrichtung und/oder die Datenübertragungseinrichtung und/oder die Datenverarbeitungseinrichtung und/oder die Datenspeichereinrichtung und/oder die Datenanzeigeeinrichtung und/oder die Energieversorgungseinrichtung können vollständig oder nur zum Teil mit der Formbacke bewegungsfest verbunden sein. Die Verbindung kann beispielsweise durch eine Klebe- oder Schraubverbindung realisiert sein. Die Verbindung mit der Formbacke kann unmittelbar oder mittelbar realisiert sein. Eine oder mehrere der genannten Einrichtungen können insbesondere unmittelbar an einer Außenfläche der Formbacke befestigt sein. Eine mittelbare Verbindung kann mittels einer Halterung realisiert sein. Die Halterung kann beispielsweise als Haltewinkel ausgestaltet sein. Weiterhin können eine oder mehrere der genannten Einrichtungen unmittelbar mit der Formbacke bewegungsfest verbunden sein und/oder eine oder mehrere der genannten Einrichtungen mittelbar mit der Formbacke bewegungsfest verbunden sein.

Ein unmittelbares Befestigen einer oder mehrerer der genannten Einrichtungen ermöglicht eine kompakte Bauform der Formbacke. Das Vorsehen einer zusätzlichen Halterung ist dabei nicht erforderlich.

Nach einer weiteren vorteilhaften Ausgestaltung der Erfindung umfasst die Sensoreinrichtung einen Temperatursensor, und/oder einen Ultraschallsensor, und/oder einen Drucksensor und/oder einen kapazitiven Sensor als den mindestens einen Sensor.

Der Temperatursensor ist vorzugsweise ein Thermoelement. Mittels des Temperatursensors kann eine Temperatur des Kunststoffschmelzeschlauchs bzw. des daraus zu formenden Kunststoffrohrs bestimmt werden. Der Temperatursensor ist vorzugsweise thermisch gegenüber der Formbacke isoliert.

Der Ultraschallsensor umfasst vorzugsweise einen Ultraschallsender und/oder Ultraschallempfänger. Der Ultraschallsensor wird in der Literatur auch häufig mit dem Begriff "Ultraschallkopf" bezeichnet. Angesichts der Unterscheidung der Begriffe "Sensor" und "Sensorkopf" wird in der vorliegenden Beschreibung die Verwendung des Begriffs "Ultraschallkopf" vermieden. Mittels eines Ultraschallsensors kann eine Wanddicke des zu formenden Kunststoffschmelzeschlauchs bzw. des Kunststoffrohrs bestimmt werden.

Der Drucksensor kann beispielsweise ein Dehnungsmessstreifen (DMS) sein. Mittels des Drucksensors kann beispielsweise festgestellt werden, ob das zu formende Kunststoffrohr Kontakt mit der Formfläche der Formbacke hat, das heißt ob der zu formende Kunststoffschmelzeschlauch bzw. das Kunststoffrohr die Formfläche der Formbacke berührt. Durch eine Auswertung der Daten vom Drucksensor kann daher der Ablösezeitpunkt des Kunststoffschmelzeschlauchs bzw. des Kunststoffrohrs festgestellt werden, das heißt der Zeitpunkt, zu dem das zu formende Kunststoffrohr den Kontakt mit der Formfläche verliert. Der Ablösezeitpunkt kann auch als Entformungszeitpunkt bezeichnet werden.

Weiterhin kann der kapazitive Sensor zum Feststellen verwendet werden, ob der zu formende Kunststoffschmelzeschlauch bzw. das Kunststoffrohr Kontakt mit der Formfläche der Formbacke hat. Durch eine Auswertung der Daten vom kapazitiven Sensor kann also auch der Ablösezeitpunkt des Kunststoffschmelzeschlauchs bzw. des Kunststoffrohrs festgestellt werden.

Durch eine Auswertung der mittels eines Temperatursensors erfassten Daten in Zusammenhang mit dem mittels des Drucksensors und/oder kapazitiven Sensors bestimmten Ablösezeitpunkt kann ferner eine Ablösetemperatur bzw. Entformungstemperatur bestimmt werden.

Vorteilhafterweise können die Prozessparameter derart angepasst werden, dass die Ablösung des Kunststoffschmelzeschlauchs von der Formfläche möglichst spät erfolgt. Ein möglichst langes Anhaften des Kunststoffschmelzeschlauchs an der Formfläche ist wegen der dabei hohen Wärmeübertragung wünschenswert. Die Effizienz der Kühlung des Kunststoffschmelzeschlauchs durch die Formbacke kann also durch Hinauszögern des Ablösezeitpunkts maximiert werden.

Vorzugsweise ist der Sensor bzw. sind die Sensoren geeignet, Temperaturen bis zumindest 200°C auszuhalten, besonders bevorzugt Temperaturen bis zumindest 230°C.

Die erfindungsgemäße Formbacke umfasst beispielsweise einen Temperatursensor und einen kapazitiven Sensor. In einem anderen Beispiel umfasst die erfindungsgemäße Formbacke einen Temperatursensor, einen kapazitiven Sensor und einen Ultraschallsensor. In einem anderen Beispiel umfasst die erfindungsgemäße Formbacke einen Temperatursensor, einen kapazitiven Sensor und mehrere, beispielsweise drei, Ultraschallsensoren.

Nach einer weiteren vorteilhaften Ausgestaltung der Erfindung sind mehrere Sensorköpfe im Bereich der Formfläche jeweils in Umfangsrichtung voneinander beabstandet angeordnet. Vorzugsweise sind die Sensorköpfe derart angeordnet, dass benachbarte Sensorköpfe jeweils zueinander den gleichen Abstand in Umfangsrichtung aufweisen. Insbesondere können mehrere Sensorköpfe von Ultraschallsensoren im Bereich der Formfläche jeweils in Umfangsrichtung voneinander beabstandet angeordnet sein, vorzugsweise mit jeweils gleichem Abstand für benachbarte Sensorköpfe. Beispielsweise können zwei Ultraschallsensoren derart vorgesehen sein, dass deren Sensorköpfe zueinander einen Winkel von 90° aufweisen. Es können drei Ultraschallsensoren derart vorgesehen sein, dass benachbarte Sensorköpfe jeweils zueinander einen Winkel von 60° aufweisen. Es können vier Ultraschallsensoren derart vorgesehen sein, dass benachbarte Sensorköpfe jeweils zueinander einen Winkel von 45° aufweisen. Es können fünf Ultraschallsensoren derart vorgesehen sein, dass benachbarte Sensorköpfe jeweils zueinander einen Winkel von 36° aufweisen. Es können sechs Ultraschallsensoren derart vorgesehen sein, dass benachbarte Sensorköpfe jeweils zueinander einen Winkel von 30° aufweisen. Vorzugsweise weist die paarweise zur Formbacke angeordnete weitere Formbacke eine entsprechende Anordnung der Sensorköpfe, insbesondere der Sensorköpfe von Ultraschallsensoren, auf.

Durch das Vorsehen mehrerer Ultraschallsensoren mit in Umfangsrichtung voneinander beabstandeter Anordnung der Sensorköpfe ist es möglich, einen Verlauf und/oder eine Verteilung der Wanddicke des zu formenden Kunststoffschmelzeschlauchs und/oder des Kunststoffrohrs in Umfangsrichtung zu bestimmen.

Nach einer weiteren vorteilhaften Ausgestaltung der Erfindung sind die Formbacken jeweils in der Art eines Profilkörpers mit der in axialer Richtung verlaufenden, vorzugsweise konkaven, Formfläche, zwei in radialer Richtung verlaufenden, vorzugsweise ebenen, Anschlussflächen und mehreren in axialer Richtung verlaufenden Außenflächen ausgebildet. Vorzugsweise schließen an die Formfläche zwei, vorzugsweise ebene, Innenflächen an. Bei einem aus zwei Formbacken gebildeten Formbackenpaar stoßen die Innenflächen der beiden Formbacken vorzugsweise derart aneinander, dass sich die beiden Formflächen der beiden Formbacken unter Ausbildung einer im Wesentlichen zylindrischen Innenfläche ergänzen. Entlang der Formstrecke sind benachbarte Formbackenpaare vorzugsweise derart angeordnet, dass die beteiligten Formbacken mit ihren entsprechenden Anschlussflächen unmittelbar aufeinanderfolgen. Insbesondere können die aufeinanderfolgenden Formbackenpaare entlang der Formstrecke mit den Anschlussflächen der beteiligten Formbacken aneinanderstoßen.

Die im vorangehenden Absatz verwendeten Begriffe axial und radial beziehen sich auf die durch die vorzugsweise im Wesentlichen halbzylinderförmige Erstreckung der Formfläche und/oder durch die im Wesentlichen zylindrische Innenfläche des Formbackenpaars definierten Zylinderachse. Die axiale Richtung ist also parallel zur Zylinderachse und wird in der vorliegenden Anmeldung auch als Längsrichtung bezeichnet. Die radiale Richtung ist senkrecht zur Zylinderachse.

Vorzugsweise sind die Formbacken aus einem metallischen Werkstoff, beispielsweise aus Aluminium oder aus Stahl gefertigt.

Die Datenaufnahmeeinrichtung und/oder die Datenübertragungseinrichtung und/oder die Datenverarbeitungseinrichtung und/oder die Datenspeichereinrichtung und/oder die Datenanzeigeeinrichtung und/oder die Energieversorgungseinrichtung sind vorzugsweise an einer der Außenflächen der Formbacke angeordnet und/oder bewegungsfest mit Außenfläche der Formbacke verbunden.

Nach einer weiteren vorteilhaften Ausgestaltung der Erfindung weist die Datenübertragungseinrichtung einen ersten Abschnitt auf, der ausgehend vom Sensor zumindest abschnittsweise in einem Bereich entlang der Formfläche und/oder in einem Bereich einer der Anschlussflächen, und/oder einer der Innenflächen, und/oder einer der Außenflächen der Formbacke verläuft. Bei einem Vorhandensein mehrerer Sensoren kann die Datenübertragungseinrichtung mehrere erste Abschnitte aufweisen. Diese verlaufen ausgehend vom jeweiligen Sensor vorzugsweise zumindest abschnittsweise in einem Bereich entlang der Formfläche und weisen vorzugsweise jeweils einen daran anschließenden Abschnitt auf, der im Bereich einer der Anschlussflächen, und/oder einer der Innenflächen, und/oder einer der Außenflächen der Formbacke verläuft. Die mehreren ersten Abschnitte können auch zumindest teilweise zu einem gemeinsamen ersten Abschnitt oder zu mehreren gemeinsamen ersten Abschnitten zusammengefasst sein.

Nach einer weiteren vorteilhaften Ausgestaltung der Erfindung weist die Datenübertragungseinrichtung einen ersten Abschnitt auf, der ausgehend vom Sensor zumindest abschnittsweise in einem Bereich entlang der Formfläche und/oder in einem Bereich einer der Anschlussflächen, und/oder einer der Innenflächen, und/oder einer der Außenflächen aufgedruckt ist. Wie oben bereits beschrieben, kann die Datenübertragungseinrichtung bei einem Vorhandensein mehrerer Sensoren mehrere erste Abschnitte aufweisen. Diese sind vorzugsweise ausgehend vom jeweiligen Sensor zumindest abschnittsweise in einem Bereich entlang der Formfläche und/oder in einem Bereich einer der Anschlussflächen, und/oder einer der Innenflächen, und/oder einer der Außenflächen aufgedruckt. Die mehreren ersten Abschnitte können wiederum zumindest teilweise zu einem gemeinsamen ersten Abschnitt oder zu mehreren gemeinsamen ersten Abschnitten zusammengefasst sein.

Der eine erste Abschnitt bzw. die mehreren ersten Abschnitte der Datenübertragungseinrichtung können eine aufgedruckte Verkabelung sein. Die aufgedruckte Verkabelung weist vorzugsweise eine Schichtdicke von 0,02 mm bis 0,1 mm auf, besonders bevorzugt von etwa 0,05 mm auf.

Nach einer weiteren vorteilhaften Ausgestaltung der Erfindung weist die Datenübertragungseinrichtung einen ersten Abschnitt auf, der ausgehend vom Sensor in einer Bohrung oder in einer Sackbohrung verläuft. Wie oben bereits beschrieben, kann die Datenübertragungseinrichtung bei einem Vorhandensein mehrerer Sensoren mehrere erste Abschnitte aufweisen. Diese verlaufen vorzugsweise ausgehend vom jeweiligen Sensor in der jeweiligen Bohrung oder in der jeweiligen Sackbohrung.

Die Datenübertragungseinrichtung kann bei einem Vorhandensein mehrerer Sensoren mehrere erste Abschnitte der unterschiedlichen in den vorangehenden Absätzen beschriebenen Arten aufweisen. Die Datenübertragungseinrichtung kann beispielsweise einen ersten Abschnitt aufweisen, der ausgehend vom Sensor zumindest abschnittsweise in einem Bereich entlang der Formfläche und/oder in einem Bereich einer der Anschlussflächen, und/oder einer der Innenflächen, und/oder einer der Außenflächen der Formbacke verläuft, und/oder einen ersten Abschnitt aufweisen, der ausgehend vom Sensor zumindest abschnittsweise in einem Bereich entlang der Formfläche und/oder in einem Bereich einer der Anschlussflächen, und/oder einer der Innenflächen, und/oder einer der Außenflächen aufgedruckt ist, und/oder einen ersten Abschnitt aufweisen, der ausgehend vom Sensor in einer Bohrung oder in einer Sackbohrung verläuft. Die Datenübertragungseinrichtung kann dabei selbstverständlich auch mehrere erste Abschnitte zumindest einer der genannten Arten aufweisen.

Beispielsweise kann die Sensoreinrichtung ein aufgedrucktes Thermoelement, und/oder einen aufgedruckten kapazitiven Sensor und/oder mehrere jeweils in einer Sackbohrung vorgesehene Ultraschallsensoren aufweisen. Die Datenübertragungseinrichtung kann in diesem Beispiel einen ersten Abschnitt aufweisen, der ausgehend vom Thermoelement zumindest abschnittsweise in einem Bereich entlang der Formfläche und/oder in einem Bereich einer der Anschlussflächen aufgedruckt ist, und einen ersten Abschnitt aufweisen, der ausgehend vom kapazitiven Sensor zumindest abschnittsweise in einem Bereich entlang der Formfläche und/oder in einem Bereich der gleichen Anschlussfläche aufgedruckt ist. Beispielsweise im Bereich der Anschlussfläche können der dem Thermoelement zugeordnete erste Abschnitt und der dem kapazitiven Sensor zugeordnete erste Abschnitt zusammengefasst sein. Zusätzlich kann die Datenübertragungseinrichtung in diesem Beispiel jeweils einen ersten Abschnitt aufweisen, der ausgehend von den jeweiligen Ultraschallsensoren in den jeweiligen Sackbohrungen verläuft.

Vorzugsweise weist die Datenübertragungseinrichtung den ersten Abschnitt zur Datenübertragung innerhalb der Formbacke auf. Zusätzlich kann die Datenübertragungseinrichtung einen zweiten Abschnitt vorzugsweise zur Datenübertragung von der Formbacke weg aufweisen.

Nach einer weiteren vorteilhaften Ausgestaltung der Erfindung umfasst die Datenübertragungseinrichtung einen zweiten Abschnitt, der vorzugsweise ein Funkmodul aufweist. Das Funkmodul ist beispielsweise ein W-LAN-Modul. Der zweite Abschnitt der Datenübertragungseinrichtung ist vorzugsweise auf einer der Außenflächen der Formbacke angeordnet und/oder mit einer der Außenflächen der Formbacke bewegungsfest verbunden.

Nach einer weiteren vorteilhaften Ausgestaltung der Erfindung umfasst die Vorrichtung eine Steueranlage. Die Steueranlage weist eine Kommunikationseinrichtung, vorzugsweise ein weiteres Funkmodul, auf. Das weitere Funkmodul ist beispielsweise ein W-LAN-Modul.

Die Steueranlage weist vorzugsweise einen Mikroprozessor und/oder einen Speicher und/oder eine Schnittstelle und/oder eine Bedieneinrichtung auf. Weiterhin ist die Anzeigeeinrichtung vorzugsweise in der Steueranlage vorgesehen bzw. gehört die Anzeigeeinrichtung vorzugsweise der Steueranlage an. Die Anzeigeeinrichtung ist vorzugsweise ein Monitor bzw. ein Display. Die Anzeigeeinrichtung ermöglicht die Visualisierung der mittels der Sensoren erfassten Daten. Außerdem ist die Steueranlage vorzugsweise derart ausgestalten, dass die Antriebseinrichtung mittels der Steueranlage steuerbar ist.

Nach einer weiteren vorteilhaften Ausgestaltung der Erfindung sind der zweite Abschnitt der Datenübertragungseinrichtung und die Kommunikationseinrichtung der Steueranlage zu einer Kommunikation untereinander ausgebildet. Vorzugsweise sind das Funkmodul und das weitere Funkmodul zu einer Funkkommunikation untereinander ausgebildet. Die Funkkommunikation ist vorzugsweise auf der Grundlage von W-LAN realisiert.

Dadurch wird eine Kommunikation zwischen der Sensoreinrichtung und der Steueranlage ermöglicht. Die Kommunikation erfolgt vorzugsweise in Echtzeit. Die Kommunikation kann nur in einer Richtung, beispielsweise nur von der Sensoreinrichtung zur Steueranlage, vorgesehen sein. Vorzugsweise ist die Kommunikation in beide Richtungen vorgesehen.

Vorzugsweise sind die jeweiligen zweiten Abschnitte der Datenübertragungseinrichtungen mehrerer jeweils eine Sensoreinrichtung aufweisender Formbacken zu einer Kommunikation mit der Kommunikationseinrichtung der Steueranlage ausgebildet. Besonders bevorzugt sind die jeweiligen Funkmodule mehrerer jeweils eine Sensoreinrichtung aufweisender Formbacken zu einer Funkkommunikation mit dem weiteren Funkmodul der Steueranlage ausgebildet.

Die Kommunikation zwischen der Sensoreinrichtung oder mehreren Sensoreinrichtungen und der Steueranlage ermöglicht das Übertragen von Messwerten und/oder Ausgabewerten der Sensoreinrichtung, insbesondere der Sensordatenerfassungseinrichtung und/oder der Datenverarbeitungseinrichtung und/oder der Speichereinrichtung und/oder der Energieversorgungseinrichtung.

Nach Maßgabe der Erfindung wird weiterhin eine Formbacke zur Herstellung eines vorzugsweise gewellten Kunststoffrohrs aus einem Kunststoffschmelzeschlauch beansprucht, wobei die Formbacke als eine die Sensoreinrichtung aufweisende Formbacke der erfindungsgemäßen Vorrichtung ausgebildet ist

Die erfindungsgemäße Formbacke weist eine Formfläche zum vorzugsweise gewellten Formen des extrudierten Kunststoffschmelzeschlauchs auf. Weiterhin weist die erfindungsgemäße Formbacke eine Sensoreinrichtung auf, die mindestens einen Sensor mit einem Daten erfassenden Sensorkopf umfasst, der derart angeordnet ist, dass sein Erfassungsbereich einen Bereich der Formfläche und/oder einen Bereich des Aufnahmeraums umfasst.

Bevorzugte Ausführungsformen der erfindungsgemäßen Formbacke können die oben abgehandelten Merkmale aufweisen.

Erfindungsgemäß wird das Formbackenpaar derart aus zwei erfindungsgemäßen Formbacken gebildet, dass sich die beiden Formflächen der beiden jeweils die Sensoreinrichtung aufweisenden Formbacken unter Ausbildung einer im Wesentlichen zylindrischen Innenfläche ergänzen. Dabei stoßen die beiden das Formbackenpaar bildenden Formbacken vorzugsweise mit ihren jeweiligen Innenflächen aneinander.

Die beiden das Formbackenpaar bildenden erfindungsgemäßen Formbacken sind vorzugsweise identisch oder zueinander spiegelbildlich. Alternativ dazu kann ein Formbackenpaar aus verschieden ausgestalteten erfindungsgemäßen Formbacken gebildet sein.

Weiterhin kann ein Formbackenpaar aus einer erfindungsgemäßen Formbacke und einer herkömmlichen Formbacke gebildet sein.

Nach einer vorteilhaften Ausgestaltung der Erfindung sind mehrere Sensorköpfe, insbesondere mehrere Sensorköpfe von Ultraschallsensoren, über den kompletten Umfang der Innenfläche verteilt jeweils im Bereich der Formfläche und jeweils in Umfangsrichtung voneinander beabstandet angeordnet.

Vorzugsweise weisen die beiden das Formbackenpaar bildenden Formbacken jeweils eine entsprechende Anordnung, vorzugsweise eine identische Anordnung der Sensorköpfe auf. Vorzugsweise sind die Sensorköpfe derart angeordnet, dass benachbarte Sensorköpfe jeweils zueinander den gleichen Abstand in Umfangsrichtung aufweisen. Insbesondere können mehrere Sensorköpfe von Ultraschallsensoren mit jeweils zueinander gleichem Abstand in Umfangsrichtung für benachbarte Sensorköpfe angeordnet sein. Beispielsweise können vier Ultraschallsensoren derart am Formbackenpaar vorgesehen sein, dass benachbarte Sensorköpfe zueinander einen Winkel von 90° aufweisen. Es können sechs Ultraschallsensoren derart vorgesehen sein, dass benachbarte Sensorköpfe jeweils zueinander einen Winkel von 60° aufweisen. Es können acht Ultraschallsensoren derart vorgesehen sein, dass benachbarte Sensorköpfe jeweils zueinander einen Winkel von 45° aufweisen. Es können zehn Ultraschallsensoren derart vorgesehen sein, dass benachbarte Sensorköpfe jeweils zueinander einen Winkel von 36° aufweisen. Es können zwölf Ultraschallsensoren derart vorgesehen sein, dass benachbarte Sensorköpfe jeweils zueinander einen Winkel von 30° aufweisen.

Durch das Vorsehen mehrerer Ultraschallsensoren mit in Umfangsrichtung voneinander beabstandeter Anordnung der Sensorköpfe ist es möglich, einen Verlauf und/oder eine Verteilung der Wanddicke des zu formenden Kunststoffschmelzeschlauchs und/oder des Kunststoffrohrs in Umfangsrichtung zu bestimmen.

Erfindungsgemäß umfasst das Verfahren zur Herstellung von vorzugsweise gewelltem Kunststoffrohr in einer erfindungsgemäßen Vorrichtung die folgenden Schritte:
- Führen des extrudierten Kunststoffschmelzeschlauchs mit der mindestens einen die Sensoreinrichtung aufweisenden Formbacke entlang der Formstrecke, und währenddessen:
- In-situ-Erfassen des Zustands des Kunststoffschmelzeschlauchs in der durch die Formbacken gebildeten Formstrecke mittels der Sensoreinrichtung.

Der Zustand des Kunststoffschmelzeschlauchs kann beispielsweise Daten zur Temperatur des Kunststoffschmelzeschlauchs, zum den Kunststoffschmelzeschlauch umgebenden Druck und/oder Vakuum, zum Ablösezeitpunkt des Kunststoffschmelzeschlauchs von der Formfläche umfassen. Die Daten werden durch die Sensoreinrichtung mittels des Sensors bzw. mittels der Sensoren bestimmt. Beispielsweise kann als Sensor und/oder können als Sensoren ein Thermoelement zur Bestimmung der Temperatur des Kunststoffschmelzeschlauchs, ein Drucksensor zur Bestimmung des den Kunststoffschmelzeschlauch umgebenden Drucks bzw. Vakuums und/oder ein kapazitiver Sensor zur Bestimmung des Ablösezeitpunkts des Kunststoffschmelzeschlauchs von der Formfläche vorgesehen sein.

Das erfindungsgemäße Verfahren zur Herstellung von vorzugsweise gewelltem Kunststoffrohr ermöglicht eine prozessnahe Erfassung in-situ von Messdaten. Dadurch können die Eigenschaften des zu formenden Kunststoffschmelzeschlauchs prozessnahe überwacht werden. Die Überwachung erfolgt vorteilhafterweise in Echtzeit. Dadurch ist vorteilhafterweise eine unmittelbare Reaktion auf festgestellte unerwünschte Eigenschaften oder Störungen möglich. Weiterhin ist ein genaueres Verständnis des Formgebungsprozesses des Kunststoffschmelzeschlauchs bzw. des Kunststoffrohrs ermöglicht.

Insbesondere können mit dem erfindungsgemäßen Verfahren Prozessparameter zuverlässig gemessen werden und der Zustand des zu formenden Kunststoffschmelzeschlauchs zuverlässig bestimmt werden. Dadurch kann eine hohe Qualität des herzustellenden Kunststoffrohrs sichergestellt werden.

Nach einer vorteilhaften Ausgestaltung der Erfindung umfasst das Verfahren während des Führens des extrudierten Kunststoffschmelzeschlauchs und/oder des Kunststoffrohrs mit der mindestens einen die Sensoreinrichtung aufweisenden Formbacke entlang der Formstrecke zusätzlich den folgenden Schritt:
- Anpassen von Prozessparametern aufgrund des in-situ-erfassten Zustands des Kunststoffschmelzeschlauchs und/oder Kunststoffrohrs.

Die Prozessparameter umfassen vorzugsweise eine Vortriebsgeschwindigkeit des Kunststoffschmelzeschlauchs und/oder Kunststoffrohrs, ein den Kunststoffschmelzeschlauch und/oder das Kunststoffrohr umgebendes Vakuum und/oder einen Druck der Innenluft, einen Kühlwasserdurchfluss durch die Formbacken, eine Kühlwassertemperatur, Schmelzetemperatur, eine Temperierung und/oder Heizstärke der Rohre bzw. Leitungen zum Einstellen einer Viskosität des Kunststoffs, eine Extruderdrehzahl, eine Extrudertemperatur, eine Zentrierung der Austrittsdüse des Spritzkopfs und/oder eine Größe des Düsenspalts der Austrittsdüse.

Vorteilhafterweise können die Prozessparameter zeitnah und in-situ angepasst werden. Dadurch kann der Formgebungsprozess des Kunststoffschmelzeschlauchs optimiert werden.

Vorteilhafterweise können die Prozessparameter beispielsweise derart angepasst werden, dass die Ablösung des Kunststoffschmelzeschlauchs von der Formfläche möglichst spät erfolgt, das heißt der Ablösezeitpunkt ein möglichst später Zeitpunkt in der Prozessführung ist. Ein möglichst langes Anhaften des Kunststoffschmelzeschlauchs an der Formfläche ist wegen der dabei hohen Wärmeübertragung wünschenswert. Die Effizienz der Kühlung des Kunststoffschmelzeschlauchs durch die Formbacke kann also durch Hinauszögern des Ablösezeitpunkts maximiert werden. Beispielsweise können zur Beeinflussung des Ablösezeitpunkt das den Kunststoffschmelzeschlauch umgebende Vakuum und/oder der Druck der Innenluft angepasst werden. Vorzugsweise werden die folgenden vorbereitenden Schritte durchgeführt:
- Fortwährendes Extrudieren eines Kunststoffschmelzeschlauchs mit dem Spritzkopf des Extruders,
- Aufsetzen der Formfläche der Formbacke auf den vorzugsweise gewellt zu formenden extrudierten Kunststoffschmelzeschlauch.

Dabei wird vorzugsweise der vorzugsweise gewellt zu formende extrudierten Kunststoffschmelzeschlauch durch die durch die beiden Formflächen gebildete zylindrischen Innenfläche des Formbackenpaars umschlossen.

Die Erfindung wird nun anhand von Ausführungsbeispielen näher erläutert. Es zeigen
- Fig. 1a: eine Schnittdarstellung einer ersten erfindungsgemäßen Form backe,
- Fig. 1b: eine Ansicht auf Innenflächen der ersten erfindungsgemäßen Form backe,
- Fig. 1c: eine Ansicht auf eine Anschlussfläche der ersten erfindungsgemäßen Formbacke,
- Fig. 1d: eine Detailansicht zu Fig 1c,
- Fig. 2a: eine Ansicht auf Innenflächen einer zweiten erfindungsgemäßen Form backe,
- Fig. 2b: eine Ansicht auf eine Anschlussfläche der zweiten erfindungsgemäßen Formbacke,

- Fig. 3a: eine Ansicht auf Außenflächen einer dritten erfindungsgemäßen Form backe,
- Fig. 3b: eine Ansicht auf Innenflächen der dritten erfindungsgemäßen Form backe,
- Fig. 3c: eine Ansicht auf eine Anschlussfläche der dritten erfindungsgemäßen Formbacke,
- Fig. 3d: eine Detailansicht zu Fig 3c,
- Fig. 4a: eine Schnittdarstellung einer vierten erfindungsgemäßen Form backe,
- Fig. 4b: eine Ansicht auf Innenflächen der vierten erfindungsgemäßen Form backe,
- Fig. 4c: eine Ansicht auf eine Anschlussfläche der vierten erfindungsgemäßen Formbacke,

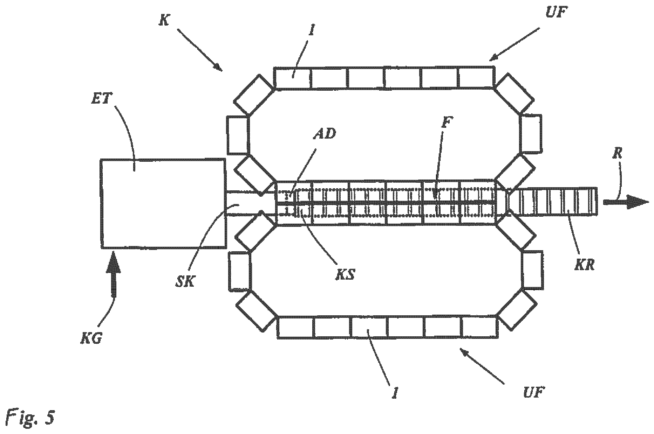

- Fig. 5: eine schematische Darstellung einer erfindungsgemäßen Vorrichtung zur Herstellung von Kunststoffrohren, umfassend einen Extruder mit seinem Spritzkopf und einen Korrugator mit umlaufend angetriebenen Formbacken

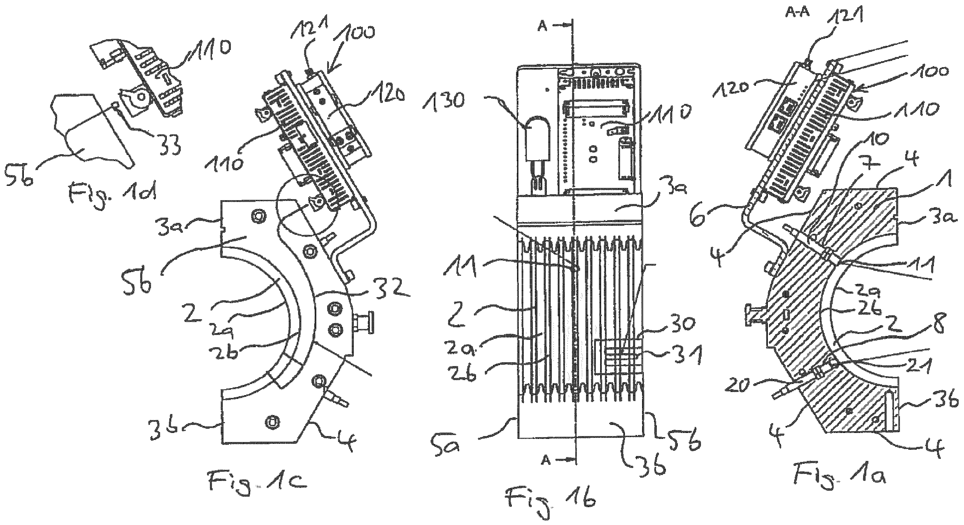

Fig. 1a zeigt eine Schnittdarstellung einer ersten erfindungsgemäßen Formbacke 1. Fig. 1b zeigt dazu eine Ansicht auf die Formbacke 1 ausgehend von der rechten Seite aus der Schnittdarstellung der Fig. 1a. Der in Fig. 1a angewandte Schnitt wiederum erfolgt entlang der in Fig. 1b eingezeichneten Schnittlinie A-A.

Die Formbacke 1 weist eine konkave Formfläche 2 mit einer im Wesentlichen halbzylinderförmigen Erstreckung und einer gewellten Oberfläche auf. Die an der Oberfläche vorgesehenen Wellen sind dabei vorzugsweise derart ausgestaltet, dass sich Wellenberge 2a bzw. Wellentäler 2b jeweils in Umfangsrichtung der Formfläche erstrecken. Die Wellenberge 2a bzw. Wellentäler 2b erstrecken sich also jeweils senkrecht zu einer Längsrichtung, die parallel zu einer durch die halbzylinderförmige Erstreckung definierten Zylinderachse verläuft.

Die Formbacke 1 ist dazu ausgelegt, in einer Vorrichtung zur Herstellung von gewelltem Kunststoffrohr, das heißt in einem sogenannten Korrugator K, einen Kunststoffschmelzeschlauch KS, der von einem an einen Extruder ET angeschlossenen Spritzkopf SK extrudiert wird, gewellt zu formen. Die Formfläche 2 bildet eine Negativform für das gewellte Formen des Kunststoffschmelzeschlauchs KS. Dabei umschließt die Formfläche 2 den halben Umfang des extrudierten Kunststoffschmelzeschlauchs KS. Die Formbacke 12 wird dabei paarweise mit einer weiteren Formbacke angeordnet und bildet mit dieser ein Formbackenpaar. Die weitere Formbacke kann identisch oder spiegelbildlich zur Formbacke 1 sein. Die Formfläche 2 der weiteren Formbacke 1 umschließt die verbleibende Hälfte des Umfangs des extrudierten Kunststoffschmelzeschlauchs KS.

Die Formbacken 1 werden paarweise, das heißt als Formbackenpaare, hintereinander angeordnet entlang einer Formstrecke F in Produktionsrichtung R des extrudierten Kunststoffschmelzeschlauchs KS geführt. Die paarweise entlang der Formstrecke geführten Formbacken bilden mit ihren einander zugewandten Formflächen einen Aufnahmeraum zur Aufnahme des Kunststoffschmelzeschlauchs. Durch Beaufschlagung des extrudierten Kunststoffschmelzeschlauchs mit den Formflächen 2 der Formbackenpaare wird aus dem extrudierten Kunststoffschmelzeschlauch ein gewelltes Kunststoffrohr KR hergestellt.

Die Formbacke 1 weist weiterhin zwei ebene Innenflächen 3a, 3b auf, die sich beidseitig an die Formfläche 2 anschließen. Die Innenflächen 3a, 3b erstrecken sich wie auch die Formfläche 2 in Längsrichtung, das heißt in axialer Richtung bzw. parallel zu der durch die halbzylinderförmige Erstreckung der Formfläche 2 definierten Zylinderachse. Anders ausgedrückt erstrecken sich die Innenflächen 3a, 3b senkrecht zu der in Fig. 1a verwendeten Schnittebene. Zur Bildung eines Formbackenpaars liegen die beiden das Formbackenpaar bildenden Formbacken mit ihren jeweiligen Innenflächen 3a, 3b derart auf Stoß, dass sich die beiden Formflächen der beiden Formbacken unter Ausbildung einer im Wesentlichen zylindrischen Innenfläche ergänzen.

Die Formbacke 1 weist weiterhin mehrere in Längsrichtung, das heißt senkrecht zu der in Fig. 1a verwendeten Schnittebene, verlaufende Außenflächen 4 und zwei einander gegenüberliegende Anschlussflächen 5a, 5b auf. Fig. 1c zeigt dazu eine Ansicht auf die Anschlussfläche 5b.

Die Anschlussflächen 5a, 5b verlaufen parallel zu der in Fig. 1a verwendeten Schnittebene, das heißt sie erstrecken sich senkrecht zur Längsrichtung. Entlang der Formstrecke sind benachbarte Formbackenpaare derart angeordnet, dass die beteiligten Formbacken mit ihren entsprechenden Anschlussflächen auf Stoß unmittelbar aufeinanderfolgen.

Die erste erfindungsgemäße Formbacke 1 weist eine Sensoreinrichtung mit mehreren Sensoren auf. Die Sensoren sind im Beispiel der ersten erfindungsgemäßen Formbacke 1 ein Temperatursensor 10, ein Ultraschallsensor 20 und ein kapazitiver Sensor 30. Die Sensoreinrichtung umfasst weiterhin eine Baugruppe 100. Die Baugruppe 100 weist als einzelne Komponenten eine Datenaufnahmeeinrichtung 110, ein W-LAN-Modul 120 und eine Energieversorgungseinrichtung 130 auf. Die Baugruppe 100 bzw. Komponenten der Baugruppe 100 sind an einer als Haltewinkel ausgestalteten Halterung 6 befestigt. Die einzelnen Komponenten der Baugruppe 100 sind dabei jeweils mit Befestigungsmitteln, insbesondere mit Schrauben und/oder Klebemitteln an der Halterung 6 befestigt. Die Halterung 6 ist an einer der Außenflächen 4 der Formbacke 1 mit Befestigungsmitteln, insbesondere mit Schrauben und/oder Klebemitteln, befestigt.

Die erste erfindungsgemäße Formbacke 1 weist weiterhin eine Bohrung 7 und eine Sackbohrung 8 auf. Die Bohrung 7 durchgreift die Formbacke 1 von einer der Außenflächen 4 bis durch die Formfläche 2 hindurch. Die Sackbohrung 8 durchdringt die Formbacke 1 ausgehend von einer der Außenflächen 4 in Richtung der Formfläche 2, ohne jedoch die Formfläche 2 zu durchbrechen. Zwischen der Sackbohrung 8 und der Formfläche 2 verbleibt vorzugsweise eine Materialstärke von 1 bis 20 mm. Besonders bevorzugt verbleibt eine Materialstärke von 5 mm.

Der Temperatursensor 10 ist derart in der Bohrung 7 aufgenommen, dass dessen Sensorkopf 11 im Bereich der Formfläche 2 angeordnet ist. Vorzugsweise ist der Sensorkopf 11 bündig zur Formfläche 2, insbesondere in einem Wellental 2b der Formfläche 2 angeordnet. Der Sensorkopf 11 des Temperatursensors 10 berührt also den zu formenden Kunststoffschmelzeschlauch und misst dabei dessen Temperatur. Vorzugsweise ist der Sensorkopf 11 seitlich von einer nicht dargestellten thermischen Isolierung umgeben, so dass die Messung der Temperatur des Kunststoffschmelzeschlauchs nicht durch die Temperatur der Formbacke 1 verfälscht wird.

Der Ultraschallsensor 20 ist derart in der Sackbohrung 8 aufgenommen, dass dessen Sensorkopf 21 beabstandet von der Formfläche 2 hinter der Formfläche 2 angeordnet ist. Der Sensorkopf 21 des Ultraschallsensors 20 ist dabei vorzugsweise hinter einem Wellental 2b der Formfläche 2 angeordnet. Es verbleibt eine Materialstärke von 1 bis 20 mm, besonders bevorzugt von 5 mm, zwischen dem Sensorkopf 21 und der Formfläche 2. Der Ultraschallsensor 20 führt also ein berührungsloses Messen des Kunststoffschmelzeschlauchs durch. Der Ultraschallsensor 20 sendet dazu Ultraschall aus und empfängt den vom Kunststoffschmelzeschlauch reflektierten Ultraschall. Durch eine Auswertung des Signals des Ultraschallsensors 20 kann insbesondere die Wandstärke des Kunststoffschmelzeschlauchs bestimmt werden.

Der Temperatursensor 10 und der Ultraschallsensor 20 sind jeweils über ein in den Figuren nicht dargestelltes Verbindungskabel mit der Datenaufnahmeeinrichtung 110 verbunden.

Der kapazitive Sensor 30 ist auf die Formfläche 2 aufgedruckt und weist dabei eine Schichtdicke von etwa 0,05 mm auf. Der kapazitive Sensor 30 schmiegt sich dabei derart an die Formfläche 2, dass er dem Verlauf der Formfläche 2 mit ihren Wellenbergen 2a und Wellentälern 2b folgt. Der kapazitive Sensor 30 umfasst einen Sensorkopf 31. Der Sensorkopf 31 bildet im Wesentlichen einen Kondensator, dessen Kapazität von in dessen unmittelbarer Umgebung vorhandener Materie beeinflusst wird. Daher kann mittels des auf die Formfläche 2 aufgedruckten kapazitiven Sensors 30 festgestellt werden, ob der Kunststoffschmelzeschlauch an der Formfläche 2 anliegt oder nicht. Durch fortschreitendes Auswerten des Signals des kapazitiven Sensors 30 kann damit der Ablösezeitpunkt des Kunststoffschmelzeschlauchs von der Formfläche 2 bestimmt werden. Der kapazitive Sensor 30 ist über eine aufgedruckte Verkabelung 32 mit der Datenaufnahmeeinrichtung 110 verbunden. Wie in Fig. 1c gezeigt verläuft die aufgedruckte Verkabelung 32 dazu auf der Anschlussfläche 5b. Die aufgedruckte Verkabelung 32 weist eine Schichtdicke von etwa 0,05 mm auf. Aus der in Fig. 1d gezeigten Detailansicht geht hervor, dass die aufgedruckte Verkabelung 32 in einen Stecker 33 mündet. Ein in den Stecker 33 eingestecktes Verbindungskabel (nicht dargestellt) komplettiert die Verbindung des kapazitiven Sensors 30 mit der Datenaufnahmeeinrichtung 110.

Durch Vorsehen des Temperatursensors 10 und des kapazitiven Sensors 30 ist möglich zusätzlich zum Ablösezeitpunkt auch eine Ablösetemperatur zu bestimmen, das heißt die Temperatur, bei der der Kunststoffschmelzeschlauch den Kontakt zur Formfläche 2 verliert.

Die Datenaufnahmeeinrichtung 110 verarbeitet die von den Sensoren erfassten Daten. Die Datenaufnahmeeinrichtung 110 kann dazu eine Datenverarbeitungseinrichtung und/oder eine Datenspeichereinrichtung umfassen.

Das W-LAN-Modul 120 kann als Teil einer Datenübertragungseinrichtung ausgestaltet sein und insbesondere einen zweiten Abschnitt der Datenübertragungseinrichtung bilden. Das W-LAN-Modul 120 ist mit der Datenaufnahmeeinrichtung 110 beispielsweise über ein nicht dargestelltes Verbindungskabel verbunden und weist weiterhin eine Antenne 121 auf. Das W-LAN-Modul 120 empfängt Daten von der Datenaufnahmeeinrichtung 110 und sendet diese mittels der Antenne 121 an eine nicht dargestellte Steueranlage. In der Steueranlage kommt es zu einer weiteren Verarbeitung der Daten.

Die Energieversorgungseinrichtung 130 umfasst vorzugsweise eine Batterie, insbesondere eine wiederaufladbare Batterie bzw. ein Akkumulator. Die Energieversorgungseinrichtung 130 ist mit Versorgungsleitungen mit der Datenaufnahmeeinrichtung 110 und dem W-LAN-Modul 120 verbunden. Die Versorgungsleitungen sind in den Figuren nicht dargestellt.

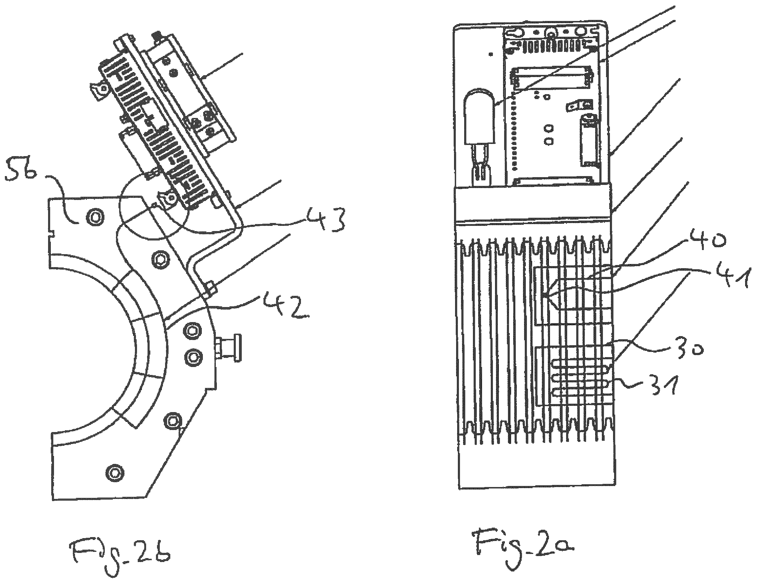

Fig. 2a und Fig. 2b zeigen eine zweite erfindungsgemäße Formbacke 1. Die zweite erfindungsgemäße Formbacke 1 stimmt im Wesentlichen mit der ersten erfindungsgemäßen Formbacke 1 überein. Daher wird auf eine Wiederholung der gemeinsamen Merkmale verzichtet. Nachfolgend werden lediglich die Merkmale der zweiten erfindungsgemäßen Formbacke 1 beschrieben, die sich von der ersten erfindungsgemäßen Formbacke 1 unterscheiden.

Im Unterschied zur ersten erfindungsgemäßen Formbacke 1 weist die zweite erfindungsgemäße Formbacke 1 keine Bohrung und keine Sackbohrung auf. Die zweite erfindungsgemäße Formbacke 1 weist nur zwei Sensoren auf, die beide auf die Formfläche 2 aufgedruckt sind. Der kapazitive Sensor 30 stimmt mit dem bereits im Zusammenhang mit der ersten erfindungsgemäßen Formbacke 1 beschriebenen kapazitiven Sensor 30 überein.

Weiterhin weist die zweite erfindungsgemäße Formbacke 1 ein Thermoelement 40 auf. Im Gegensatz zum im Zusammenhang mit der ersten erfindungsgemäßen Formbacke 1 beschriebenen Temperatursensor 10 ist das Thermoelement 40 auf die Formfläche 2 aufgedruckt. Das Thermoelement 40 weist eine Schichtdicke von etwa 0,05 mm auf und schmiegt sich derart an die Formfläche 2, dass es dem Verlauf der Formfläche 2 mit ihren Wellenbergen 2a und Wellentälern 2b folgt. Das Thermoelement 40 weist ein Leiterpaar aus kohlenstoffhaltigem Leitlack (englisch: "carbon black paint") und Silberleitlack auf. Das Leiterpaar bildet an dessen Verbindungsstelle den Sensorkopf 41 aus. Der Sensorkopf 41 des Thermoelements 40 gelangt in direkten Kontakt mit dem zu formenden Kunststoffschmelzeschlauch und misst dabei berührungslos dessen Temperatur. Dabei wird genauer gesagt eine Thermospannung gemessen, die von einer Temperaturdifferenz zwischen dem Sensorkopf 41 und einer Vergleichsstelle abhängt.

Das Thermoelement 40 ist über eine aufgedruckte Verkabelung 42 mit der Datenaufnahmeeinrichtung 110 verbunden. Wie in Fig. 2b gezeigt verläuft die aufgedruckte Verkabelung 42 auf der Anschlussfläche 5b. Die aufgedruckte Verkabelung 42 weist eine Schichtdicke von etwa 0,05 mm auf. Im Unterschied zur in Fig. 1c gezeigten aufgedruckte Verkabelung 32 der ersten erfindungsgemäßen Formbacke 1 sorgt die aufgedruckte Verkabelung 42 zugleich für die Verbindung des Thermoelements 40 mit der Datenaufnahmeeinrichtung 110 und für die Verbindung des kapazitiven Sensors 30 mit der Datenaufnahmeeinrichtung 110. Bei der zweiten erfindungsgemäßen Formbacke 1 kann daher auf eine eigenständige aufgedruckte Verkabelung 32 des kapazitiven Sensors 30 verzichtet werden. Die aufgedruckte Verkabelung 42 mündet in einen Stecker 43. Dieser ist dem oben beschrieben Stecker 33 identisch. Es wird daher auf in Fig. 1d gezeigte Detailansicht und die obige Beschreibung dazu verwiesen.

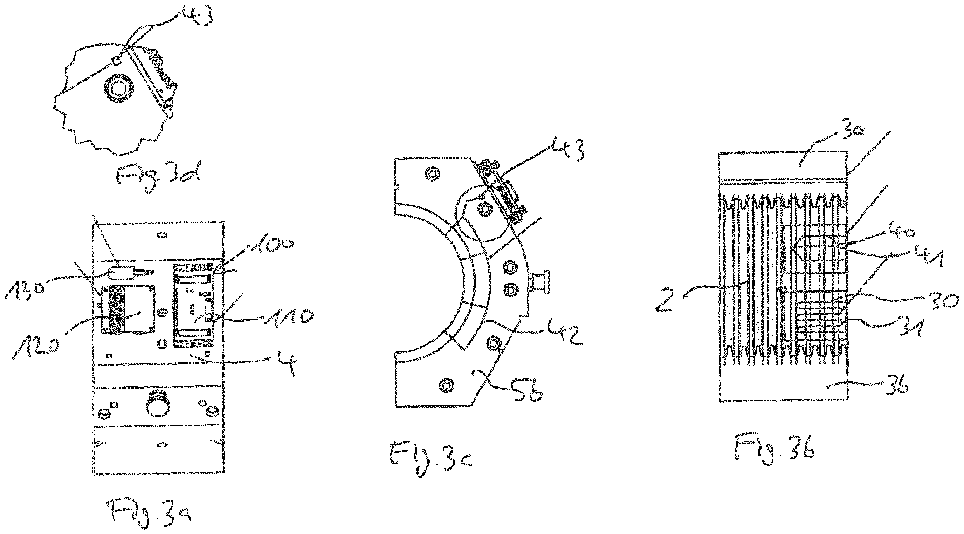

Fig. 3a zeigt eine Ansicht auf die Außenflächen 4 einer dritten erfindungsgemäßen Formbacke 1. Im Unterschied zur Ausführung der ersten und zweiten erfindungsgemäßen Formbacke 1 weist die dritte erfindungsgemäßen Formbacke 1 keine separate Halterung 6 für die Baugruppe 100 auf. Bei der dritten erfindungsgemäßen Formbacke 1 sind die einzelnen Komponenten der Baugruppe 100 stattdessen unmittelbar auf einer der Außenflächen 4 der Formbacke 1 angeordnet. Die einzelnen Komponenten der Baugruppe 100 sind dabei jeweils mit Befestigungsmitteln, insbesondere mit Schrauben und/oder Klebemitteln an der Außenfläche 4 befestigt. In dem gezeigten Beispiel weist die Baugruppe 100 wiederum die Datenaufnahmeeinrichtung 110, das W-LAN-Modul 120 und die Energieversorgungseinrichtung 130 als Komponenten auf. Die Funktionsweise der einzelnen Komponenten ist identisch zur obigen Beschreibung für die erste und zweite erfindungsgemäße Formbacke 1. Es wird daher auf die obige Beschreibung verwiesen.

Im Übrigen ist der Aufbau und die Funktionsweise der dritten erfindungsgemäßen Formbacke 1 identisch zur zweiten erfindungsgemäßen Formbacke 1. Ansichten auf die Innenflächen 3a, 3b mit der Formfläche 2 und auf die Anschlussfläche 5b der dritten erfindungsgemäßen Formbacke 1 sind in Fig. 3b bzw. Fig. 3c gezeigt. Insbesondere weist die dritte erfindungsgemäße Formbacke 1 wiederum nur zwei auf die Formfläche 2 aufgedruckte Sensoren auf, nämlich einen kapazitiven Sensor 30 und ein Thermoelement 40. Der Aufbau, die Anordnung und die Funktionsweise des kapazitiven Sensors 30 und des Thermoelements 40 sind identisch zur zweiten erfindungsgemäßen Formbacke 1. Daher wird hier auf die Beschreibung zur zweiten erfindungsgemäßen Formbacke 1 verwiesen. Im Folgenden wird lediglich die bei der dritten erfindungsgemäßen Formbacke 1 abgeänderte Positionierung des Steckers 43 beschrieben.

Die Detailansicht der Fig. 3d zeigt die Positionierung des Steckers 43 in den wiederum die aufgedruckte Verkabelung 42 mündet. Ein in den Stecker 43 eingestecktes Verbindungskabel (nicht dargestellt) komplettiert die Verbindung des kapazitiven Sensors 30 und des Thermoelements 40 mit der Datenaufnahmeeinrichtung 110.

Die dritte erfindungsgemäße Formbacke 1 ist vorteilhafterweise kompakt aufgebaut. Die dritte erfindungsgemäße Formbacke 1 weist daher eine vergleichsweise geringe räumliche Beanspruchung auf und verringert daher den konstruktiven Aufwand im Hinblick auf deren Bewegung entlang der Formstrecke und im Hinblick auf deren Rückführung nach dem vollständigen Durchlaufen der Formstrecke.

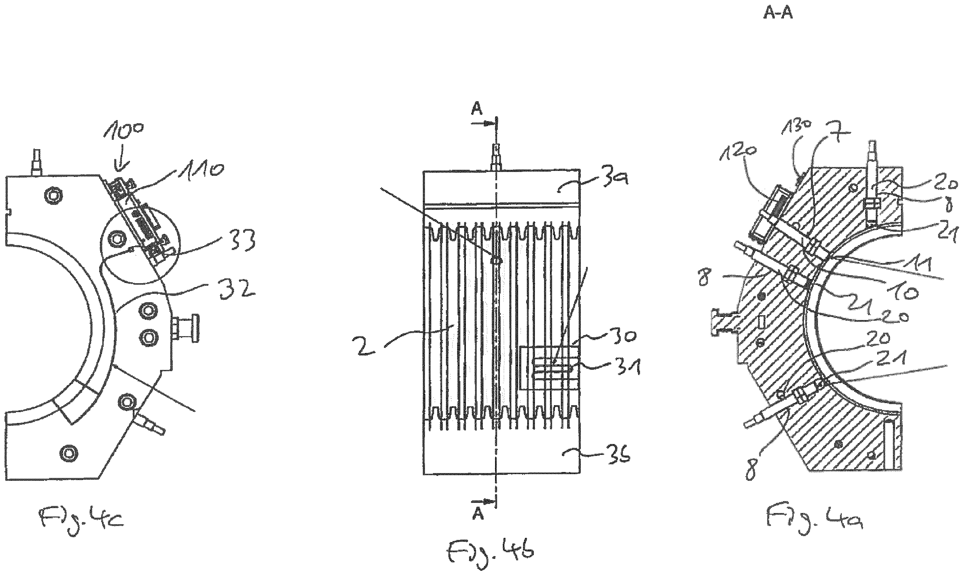

Die Figuren 4a, 4b und 4c zeigen eine vierte erfindungsgemäße Formbacke 1. Die Ansichten stimmen dabei mit den Figuren 1a, 1b und 1c zur ersten erfindungsgemäßen Formbacke 1 überein. Ebenso stimmt die Ausgestaltung der vierten erfindungsgemäßen Formbacke 1 im Wesentlichen mit der ersten erfindungsgemäßen Formbacke 1 überein. Daher wird hierauf die Beschreibung zur ersten erfindungsgemäßen Formbacke 1 verwiesen. Nachfolgend werden lediglich die Unterschiede zur ersten erfindungsgemäßen Formbacke 1 beschrieben.

Wie schon die dritte erfindungsgemäße Formbacke 1 weist die vierte erfindungsgemäße Formbacke 1 keine separate Halterung 6 für die Baugruppe 100 auf. Bei der vierten erfindungsgemäßen Formbacke 1 sind die einzelnen Komponenten der Baugruppe 100 wiederum unmittelbar auf einer der Außenflächen 4 angeordnet. In diesem Zusammenhang wird auf die Beschreibung zur dritten erfindungsgemäßen Formbacke 1 verwiesen. Zusätzlich zur Bohrung 7 und zur Sackbohrung 8 weist die vierte erfindungsgemäße Formbacke 1 zwei weitere Sackbohrungen 8 auf. In den also insgesamt drei Sackbohrungen 8 ist bei der vierten erfindungsgemäßen Formbacke 1 jeweils ein Ultraschallsensor 20 aufgenommen. Der Aufbau, die Anordnung und die Funktionsweise der jeweiligen Ultraschallsensoren 20 ist identisch zum bereits bei der ersten erfindungsgemäßen Formbacke 1 beschriebenen Ultraschallsensor 20. Daher wird auf die obige Beschreibung verwiesen.

Die drei Ultraschallsensoren 20 sind bei der vierten erfindungsgemäßen Formbacke 1 jeweils in Umfangsrichtung voneinander beabstandet angeordnet. Das Vorsehen mehrerer derart angeordneter Ultraschallsensoren 20 ermöglicht es, einen Verlauf bzw. eine Verteilung der Wanddicke des zu formenden Kunststoffschmelzeschlauchs bzw. des Kunststoffrohrs in Umfangsrichtung zu bestimmen. Dadurch kann die Gleichförmigkeit des zu formenden Kunststoffschmelzeschlauchs bzw. des Kunststoffrohrs während des kompletten Formprozesses durch die Formbacke 1 überwacht und sichergestellt werden. Vorteilhafterweise bildet die vierte erfindungsgemäße Formbacke 1 ein Formbackenpaar mit einer entsprechend mit mehreren Ultraschallsensoren 20 ausgestalteten Formbacke, so dass Wanddicken über den kompletten Umfang des Kunststoffschmelzeschlauchs bzw. des Kunststoffrohrs bestimmt werden können.

### Bezugszeichenliste

- A: Aufnahmeraum

- 1: Formbacke
- 2: Formfläche
- 2a: Wellenberg
- 2b: Wellental
- 3a, 3b: Innenflächen
- 4: Außenflächen
- 5a, 5b: Anschlussflächen
- 6: Halterung
- 7: Bohrung
- 8: Sackbohrung

- 10: Temperatursensor
- 11: Sensorkopf
- 20: Ultraschallsensor
- 21: Sensorkopf
- 30: kapazitiver Sensor
- 31: Sensorkopf
- 32: aufgedruckte Verkabelung
- 33: Stecker
- 40: Thermoelement
- 41: Sensorkopf
- 42: aufgedruckte Verkabelung
- 43: Stecker

- 100: Baugruppe
- 110: Datenaufnahmeeinrichtung
- 120: W-LAN-Modul
- 121: Antenne
- 130: Energieversorgungseinrichtung

- AD: Austrittsdüseneinrichtung
- ET: Extruder
- F: Formstrecke
- K: Korrugator
- KG: Kunststoffgranulat
- KR: Kunststoffrohr
- KS: Kunststoffschmelzeschlauch
- R: Produktionsrichtung
- SK: Spritzkopf
- UF: umlaufend angetriebene Formbacken

## Patentansprüche

1. Vorrichtung zur Herstellung von vorzugsweise gewelltem Kunststoffrohr aus einem Kunststoffschmelzeschlauch, umfassend
• einen Spritzkopf zum Anschluss an einen Extruder, wobei der Spritzkopf mit einer Austrittsdüseneinrichtung zur Extrusion des Kunststoffschmelzeschlauchs versehen ist, und
• mehrere jeweils eine Formfläche (2) zum vorzugsweise gewellten Formen des extrudierten Kunststoffschmelzeschlauchs aufweisende Formbacken (1), die mittels einer Antriebseinrichtung jeweils paarweise zum Formen des extrudierten Kunststoffschmelzeschlauchs entlang einer Formstrecke in Produktionsrichtung des extrudierten Kunststoffschmelzeschlauchs geführt angeordnet sind und mittels der Antriebseinrichtung in einer Rückführeinrichtung rückgeführt angeordnet sind, wobei die paarweise entlang der Formstrecke geführten Formbacken (1) mit ihren einander zugewandten Formflächen (2) einen Aufnahmeraum (A) zur Aufnahme des Kunststoffschmelzeschlauchs bilden,
**dadurch gekennzeichnet,**
**dass** mindestens eine der Formbacken (1) eine Sensoreinrichtung aufweist, die mindestens einen Sensor (10, 20, 30, 40) mit einem Daten erfassenden Sensorkopf (11, 21, 31, 41) umfasst, der derart angeordnet ist, dass sein Erfassungsbereich einen Bereich der Formfläche (2) und/oder einen Bereich des Aufnahmeraums (A) umfasst.

2. Vorrichtung nach Anspruch 1,
**dadurch gekennzeichnet,**
**dass** der Sensorkopf (11, 21,31,41) oder zumindest ein Abschnitt des Sensorkopfs auf der Formfläche (2) angeordnet ist, oder im Bereich der Formfläche (2) innerhalb der Formbacke (1) oder innerhalb des Aufnahmeraums (A) angeordnet ist.

3. Vorrichtung nach einem der vorangehenden Ansprüchen,
**dadurch gekennzeichnet,**
**dass** der Sensorkopf (11, 21, 31, 41) oder zumindest ein Abschnitt des Sensorkopfs beabstandet zur Formfläche innerhalb der Formbacke oder innerhalb des Aufnahmeraums angeordnet ist.

4. Vorrichtung nach einem der vorangehenden Ansprüchen,
**dadurch gekennzeichnet,**
**dass** der Sensorkopf (11, 21,31, 41) zumindest abschnittsweise auf die Formfläche aufgedruckt ist.

5. Vorrichtung nach einem der vorangehenden Ansprüchen,
**dadurch gekennzeichnet,**
**dass** der Sensorkopf (11, 21, 31, 41) in einer Bohrung, die in die Formfläche mündet, oder in einer mit der Bohrung kommunizierenden und in der Formfläche ausgebildeten Ausnehmung aufgenommen ist.

6. Vorrichtung nach einem der vorangehenden Ansprüche,
**dadurch gekennzeichnet,**
**dass** der Sensorkopf (11, 21, 31, 41) in einer die Formfläche nicht durchstoßenden Sackbohrung innerhalb der Formbacke angeordnet ist.

7. Vorrichtung nach einem der vorangehenden Ansprüche,
**dadurch gekennzeichnet,**
**dass** die Sensoreinrichtung eine Datenaufnahmeeinrichtung (110) zur Aufnahme der am Sensorkopf (11, 21, 31, 41) erfassten Daten aufweist.

8. Vorrichtung nach einem der vorangehenden Ansprüche,
**dadurch gekennzeichnet,**
**dass** die Sensoreinrichtung einen Temperatursensor (10), und/oder einen Ultraschallsensor (20), und/oder einen Drucksensor und/oder einen kapazitiven Sensor (30) als den mindestens einen Sensor umfasst.

9. Vorrichtung nach einem der vorangehenden Ansprüche,
**dadurch gekennzeichnet,**
**dass** mehrere Sensorköpfe (11, 21, 31, 41) im Bereich der Formfläche jeweils in Umfangsrichtung voneinander beabstandet angeordnet sind.

10. Vorrichtung nach einem der vorangehenden Ansprüche,
**dadurch gekennzeichnet,**
**dass** die Sensoreinrichtung eine Datenübertragungseinrichtung aufweist, die einen ersten Abschnitt aufweist, der ausgehend vom Sensor (10, 20, 30, 40) zumindest abschnittsweise in einem Bereich entlang der Formfläche (2) und/oder in einem Bereich einer der Anschlussflächen (5a, 5b), und/oder einer der Innenflächen (3a, 3b), und/oder einer der Außenflächen (4) der Formbacke (1) verläuft, insbesondere aufgedruckt ist.

11. Vorrichtung nach Anspruch 10,
**dadurch gekennzeichnet,**
**dass** die Datenübertragungseinrichtung einen ersten Abschnitt aufweist, der ausgehend vom Sensor (10, 20, 30, 40) in einer Bohrung oder in einer Sackbohrung verläuft.

12. Vorrichtung nach einem der Ansprüche 10 oder 11,
**dadurch gekennzeichnet,**
**dass** die Datenübertragungseinrichtung einen zweiten Abschnitt, der vorzugsweise ein Funkmodul aufweist, umfasst.

13. Vorrichtung nach einem der vorangehenden Ansprüche,
**dadurch gekennzeichnet,**
**dass** die Vorrichtung eine Steueranlage umfasst, und
**dass** die Steueranlage eine Kommunikationseinrichtung, vorzugsweise ein weiteres Funkmodul, aufweist.

14. Verfahren zur Herstellung von vorzugsweise gewelltem Kunststoffrohr in einer Vorrichtung nach einem der Ansprüche 1 bis 13, umfassend:
• Führen des extrudierten Kunststoffschmelzeschlauchs und/oder Kunststoffrohrs mit der mindestens einen die Sensoreinrichtung aufweisenden Formbacke (1) entlang der Formstrecke, und währenddessen:
• In-situ-Erfassen des Zustands des Kunststoffschmelzeschlauchs und/oder Kunststoffrohrs in der durch die Formbacken (1) gebildeten Formstrecke mittels der Sensoreinrichtung.

15. Verfahren nach Anspruch 14,
**dadurch gekennzeichnet,**
**dass** das Verfahren während des Führens des extrudierten Kunststoffschmelzeschlauchs und/oder Kunststoffrohrs mit der mindestens einen die Sensoreinrichtung aufweisenden Formbacke (1) entlang der Formstrecke zusätzlich den folgenden Schritt umfasst:
Anpassen von Prozessparametern aufgrund des in-situ-erfassten Zustands des Kunststoffschmelzeschlauchs und/oder Kunststoffrohrs.

## Claims

1. Device for producing a preferably corrugated plastic pipe from a molten plastic tube, comprising
• an injection head for connecting to an extruder, wherein the injection head is provided with a discharge nozzle device for extruding the molten plastic tube, and
• several moulding jaws (1) in each case having a moulding surface (2) for moulding, preferably in a corrugated manner, the extruded molten plastic tube, said moulding jaws being arranged to be guided respectively in pairs by means of a drive device for moulding the extruded molten plastic tube along a moulding path in the production direction of the extruded molten plastic tube and are arranged to be guided back in a return direction by means of the drive device, wherein the moulding jaws (1) guided in pairs along the moulding path form a receiving space (A), by means of their moulding surfaces (2) facing each other, for receiving the molten plastic tube,
**characterised in that**
at least one of the moulding jaws (1) has a sensor device which comprises at least one sensor (10, 20, 30, 40) with a data-capturing sensor head (11, 21, 31, 41), which is arranged in such a way that its capture area comprises an area of the moulding surface (2) and/or an area of the receiving space (A).

2. Device according to claim 1,
**characterised in that**
the sensor head (11, 21, 31, 41) or at least one section of the sensor head is arranged on the moulding surface (2), or is arranged in an area of the moulding surface (2) inside the moulding jaw (1) or inside the receiving space (A).

3. Device according to one of the preceding claims,
**characterised in that**
the sensor head (11, 21, 31, 41) or at least one section of the sensor head is arranged spaced apart from the moulding surface inside the moulding jaw or inside the receiving space.

4. Device according to one of the preceding claims,
**characterised in that**
the sensor head (11, 21, 31, 41) is imprinted at least in sections onto the moulding surface.

5. Device according to one of the preceding claims,
**characterised in that**
the sensor head (11, 21, 31, 41) is received in a bore hole which opens out into the moulding surface, or in a recess communicating with the bore hole and formed in the moulding surface.

6. Device according to one of the preceding claims,
**characterised in that**
the sensor head (11, 21, 31, 41) is arranged inside the moulding jaw in a blind bore hole not piercing through the moulding surface.

7. Device according to one of the preceding claims,
**characterised in that**
the sensor device has a data acquisition device (110) for the acquisition of the data captured at the sensor head (11, 21, 31, 41).

8. Device according to one of the preceding claims,
**characterised in that**
the sensor device comprises a temperature sensor (10), and/or an ultrasonic sensor (20),
and/or a pressure sensor and/or a capacitive sensor (30) as the at least one sensor.

9. Device according to one of the preceding claims,
**characterised in that**
several sensor heads (11, 21, 31, 41) are arranged spaced apart from one another in the area of the moulding surface in each case in the peripheral direction.

10. Device according to one of the preceding claims,
**characterised in that**
the sensor device has a data transmission device, which has a first section which runs, in particular is imprinted, at least in sections starting from the sensor (10, 20, 30, 40) in an area along the moulding surface (2) and/or in an area of one of the connection surfaces (5a, 5b) and/or one of the inner surfaces (3a, 3b) and/or one of the outer surfaces (4) of the moulding jaw (1).

11. Device according to claim 10,
**characterised in that**
the data transmission device has a first section, which runs in a bore hole or in a blind bore hole starting from the sensor (10, 20, 30, 40).

12. Device according to one of claims 10 or 11,
**characterised in that**
the data transmission device comprises a second section, which preferably has a radio module.

13. Device according to one of the preceding claims,
**characterised in that**
the device comprises a control system, and
the control system has a communication device, preferably a further radio module.

14. Method for producing preferably corrugated plastic tubes in a device according to one of claims 1 to 13, comprising:
• guiding the extruded molten plastic tube and/or plastic tube with the at least one moulding jaw (1) having the sensor device along the moulding path, and meanwhile
• in-situ capturing the state of the molten plastic tube and/or plastic pipe in the moulding path formed by the moulding jaws (1) by means of the sensor device.

15. Method according to claim 14,
**characterised in that**
when guiding the extruded plastic melt tube and/or plastic pipe with the at least one moulding jaw (1) having the sensor device along the moulding path, the method additionally comprises the following step:
adjusting the process parameters based on the in-situ captured state of the plastic melt tube and/or plastic pipe.

## Revendications

1. Dispositif de fabrication d'un tuyau en matière plastique, de préférence ondulé, à partir d'une gaine en masse fondue de matière plastique, comprenant
• une tête d'injection destinée à être raccordée à une extrudeuse, dans lequel la tête d'injection est munie d'un dispositif à buse de sortie pour l'extrusion de la gaine en masse fondue de matière plastique et
• plusieurs mâchoires de formage (1) comprenant chacune une surface de formage (2) pour le formage, de préférence ondulé, de la gaine en masse fondue de matière plastique extrudée, qui sont disposées de façon à être guidées au moyen d'un dispositif d'entraînement par paires pour le formage de la gaine en masse fondue de matière plastique extrudée le long d'un tronçon de formage dans la direction de la production de la gaine en masse fondue de matière plastique extrudée et sont disposées de façon à retourner, au moyen du dispositif d'entraînement, dans un dispositif de retour, dans lequel les mâchoires de formage (1) guidées par paires le long du tronçon de formage forment, avec leurs surfaces de formage (2) orientées les unes vers les autres, un espace de logement (A) pour le logement de la gaine en masse fondue de matière plastique,
**caractérisé en ce que**
au moins une des mâchoires de formage (1) comprend un dispositif de capteur qui comprend au moins un capteur (10, 20, 30, 40) avec une tête de capteur (11,21, 31, 41) relevant des données, qui est disposée de façon à ce que son domaine de détection comprenne une partie de la surface de formage (2) et/ou une partie de l'espace de logement (A).

2. Dispositif selon la revendication 1,
**caractérisé en ce que**
la tête de capteur (11, 21, 34, 41) ou au moins une partie de la tête de capteur est disposée sur la surface de formage (2) ou au niveau de la surface de formage (2) à l'intérieur de la mâchoire de formage (1) ou à l'intérieur de l'espace de logement (A).

3. Dispositif selon l'une des revendications précédentes,
**caractérisé en ce que**
la tête de capteur (11, 21, 31, 41) ou au moins une partie de la tête de capteur est disposée à distance de la surface de formage à l'intérieur de la mâchoire de formage ou à l'intérieur de l'espace de logement.

4. Dispositif selon l'une des revendications précédentes,
**caractérisé en ce que**
la tête de capteur (11, 21, 31, 41) est imprimée au moins à certains endroits sur la surface de formage.

5. Dispositif selon l'une des revendications précédentes,
**caractérisé en ce que**
la tête de capteur (11, 21, 31, 41) est logée dans un alésage qui débouche dans la surface de formage ou dans un évidement communiquant avec l'alésage et réalisé dans la surface de formage.

6. Dispositif selon l'une des revendications précédentes,
**caractérisé en ce que**
la tête de capteur (11, 21, 31, 41) est disposée dans un alésage borgne ne traversant pas la surface de formage à l'intérieur de la mâchoire de formage.

7. Dispositif selon l'une des revendications précédentes,
**caractérisé en ce que**
le dispositif de capteur comprend un dispositif d'enregistrement de données (110) pour l'enregistrement des données relevées au niveau de la tête de capteur (11, 21, 31, 41).

8. Dispositif selon l'une des revendications précédentes,
**caractérisé en ce que**
le dispositif de capteur comprend un capteur de température (10) et/ou un capteur à ultra-sons (20) et/ou un capteur de pression et/ou un capteur capacitif (30) en tant que l'au moins un capteur.

9. Dispositif selon l'une des revendications précédentes,
**caractérisé en ce que**
plusieurs têtes de capteurs (11, 21, 31, 41) sont disposées au niveau de la surface de formage de manière distante entre elles dans la direction de la circonférence.

10. Dispositif selon l'une des revendications précédentes,
**caractérisé en ce que**
le dispositif de capteur comprend un dispositif de transmission de données qui comprend une première partie qui s'étend, plus particulièrement est imprimée, à partir du capteur (10, 20, 30, 40) au moins à certains endroits dans une zone le long de la surface de formage (2) et/ou au niveau d'une des surfaces de raccordement (5a, 5b) et/ou d'une des surfaces internes (3a, 3b) et/ou d'une des surfaces externes (4) de la mâchoire de formage (1).

11. Dispositif selon la revendication 10,
**caractérisé en ce que**
le dispositif de transmission de données comprend une première partie, qui s'étend à partir du capteur (10, 20, 30, 40) dans un alésage ou dans un alésage borgne.

12. Dispositif selon l'une des revendications 10 ou 11,
**caractérisé en ce que**
le dispositif de transmission de données comprend une deuxième partie qui comprend de préférence un module radio.

13. Dispositif selon l'une des revendications précédentes,
**caractérisé en ce que**
le dispositif comprend une installation de commande et
l'installation de commande comprend un dispositif de communication, de préférence un autre module radio.

14. Procédé de fabrication d'un tuyau en matière plastique, de préférence ondulé, dans un dispositif selon l'une des revendications 1 à 13, comprenant
• le guidage de la gaine en masse fondue de matière plastique et/ou du tuyau en matière plastique avec l'au moins une mâchoire de formage (1) comprenant le dispositif de capteur le long du tronçon de formage et, pendant ce temps :
• relevé in situ de l'état de la gaine en masse fondue de matière plastique et/ou du tuyau en matière plastique dans le tronçon de formage formé par les mâchoires de formage (1) au moyen du dispositif de capteur.

15. Procédé selon la revendication 14,
**caractérisé en ce que**
ce procédé, pendant le guidage de la gaine en masse fondue de matière plastique extrudée et/ou du tuyau en matière plastique avec l'au moins une mâchoire de formage (1) comprenant le dispositif de capteur le long du tronçon de formage, comprend en outre l'étape suivante :
adaptation des paramètres du processus sur la base de l'état détecté in situ de la gaine en masse fondue de matière plastique extrudée et/ou du tuyau en matière plastique.
